(19) Europäisches Patentamt
European Patent Office
Office européen des brevets

(11) **EP 3 354 524 B1**

(12) **EUROPEAN PATENT SPECIFICATION**

(45) Date of publication and mention
of the grant of the patent:
**06.10.2021 Bulletin 2021/40**

(51) Int Cl.:
***B60T 8/172*** *(2006.01)*  ***B60T 8/17*** *(2006.01)*

(21) Application number: **17153221.1**

(22) Date of filing: **26.01.2017**

(54) **ADHESION ESTIMATING DEVICE FOR A BRAKE SYSTEM**

HAFTUNGSSCHÄTZUNGSVORRICHTUNG FÜR EIN BREMSSYSTEM

DISPOSITIF D'ESTIMATION D'ADHÉRENCE POUR UN SYSTÈME DE FREINAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.08.2018 Bulletin 2018/31**

(73) Proprietor: **KNORR-BREMSE**
**Systeme für Schienenfahrzeuge GmbH**
**80809 München (DE)**

(72) Inventor: **KREMER, Miklos**
**1215 Budapest (HU)**

(56) References cited:
**EP-A1- 2 527 183**    **EP-A1- 2 813 409**
**EP-A2- 1 746 000**    **WO-A1-2013/034694**
**WO-A2-2013/034714**    **DE-A1-102015 105 792**

**Description**

The invention relates to an adhesion estimating device for a brake system, in particular, to an estimating device for an adhesion utilization value for a brake system of a rail vehicle.

In general, brakes of rail vehicles are intended to be used at about 80% of the maximum brake deceleration. However, in normal train use, a deteriorated adhesion between the wheels of the rail vehicle and the rail cannot be recognized. Therefore, deteriorated adhesion can cause a dangerous situation in case of an emergency brake demand.

For a determination of a current adhesion level, it is basically possible to perform brakings when no train deceleration is actually needed. However, this causes waste of energy and the comfort of the passengers can be deteriorated. Another option for determining the current adhesion level would basically be an indirect measurement, however, no reliable indirect measurement is available.

An advanced train control system uses nominal deceleration curves of trains with safety distances. However, it is not possible for this system to use actual track conditions so that safety distances may be too small or they must be calculated with an enlarged safety factor.

Document EP 2 813 409 A discloses a system and method for determining effectiveness of a friction modifier along a route segment, wherein the system comprises detection devices for monitoring operation conditions that have a direct relation to a braking effort for calculating a braking measurement. Further, the system comprises detection devices for obtaining data from wheelsets that have a direct relation to a braking effort. Furthermore, the system calculates tribology characteristics base on an adhesion coefficient at a track location.

Therefore, the object underlying the invention is to remedy the above disadvantages and to provide an adhesion estimating device for economically and reliably estimating an adhesion level of a current track section.

The object is achieved by an adhesion estimating device according to claim 1 and a method according to claim 7. Further developments are subject-matter of the dependent claims.

According to an aspect of the invention, an adhesion estimating device for a brake system of a rail vehicle having brakes that can individually brake wheelsets of the rail vehicle is provided. The adhesion estimating device comprises a braking demand distributing unit for redistributing an overall braking demand into individual braking demands to individual brakes, wherein the braking demand distributing unit is configured to redistribute the overall braking demand requested for a predetermined deceleration into different individual braking demands such that the individual braking demands result in the predetermined deceleration, and an evaluation unit determining a correlation between a current adhesion value allocated to a current individual braking demand to one of the brakes and a current slip of a wheel of the wheelset braked by the one of the brakes, detected by a detection system and input into the evaluation unit, for estimating an adhesion value between the wheel and the rail.

By the provision of the such configured adhesion estimating device, it is possible to acquire information for estimating the adhesion value between the wheel and the rail during a traffic determined braking need. Therefore, during a regular deceleration, initiated by different individual braking demands by the braking demand distributing unit, the brakes are actuated such that different braking torques and, therefore, different braking forces occur. The individual braking demand are set such that the predetermined deceleration of the rail vehicle can be achieved.

From the detection system, a slip of the wheels of the individual wheelset can be detected and, therefore, a context between the individual braking demand and the slip can be determined by the evaluation unit. Since the adhesion values are previously allocated to individual braking demands, the allocation of the current adhesion value to the current slip and, therefore, the estimation of the current adhesion value are possible. In a first implementation of the adhesion estimating device according to the aspect, the adhesion estimating device is further configured to turn to a best stopping distance strategy after a predetermined interval after the current slip is detected.

Due to the turn to the best stopping distance strategy after a predetermined interval after the current slip is detected, on the one hand, the estimation of the current adhesion value is possible and, on the other hand, an effective deceleration without occurrence of extensive slip at the individual wheelsets is possible.

In a second implementation of adhesion estimating device according to the aspect or to the first implementation, it is further configured such that one of the individual braking demands to the brake is a braking demand resulting in a maximum designed braking torque of the brake.

When setting one of the individual braking demands such that it results in a maximum designed braking torque of the brake, a quick and reliable occurrence of slip is enabled such that the deceleration according to the best stopping distance strategy can be started soon.

According to the invention the adhesion estimating device further comprises a memory area configured to store correlations between adhesion values and individual braking demands, and the adhesion estimating device is configured to receive data from a wheel slip protection system. The adhesion estimating device is configured to detect an activity of the wheel slip protection system due to occurrence of the slip of at least one of the wheels caused by a current individual braking demand. Further, the evaluation unit is configured to estimate the adhesion value from the current individual braking demand.

The slip of the wheels can easily be detected by the wheel slip protection system usually provided in rail vehicles. Therefore, by an output of wheel speed signals from the wheel slip protection system into the adhesion estimating device, the current adhesion value known due to the stored correlation between the adhesion values and the individual braking demands can easily be estimated from the current braking demand and the current slip.

According to the invention the adhesion estimating device is further configured to detect the activity of the wheel slip protection system due to the occurrence of the slip of several wheels caused by current individual braking demands, and to estimate, from the current individual braking demands, a range of the adhesion value between a lower adhesion limit value allocated to a current maximum individual braking demand without causing activity of the slip protection system and an upper adhesion limit value allocated to a current minimum individual braking demand with causing activity of the slip protection system.

In case that the slip of several wheels is detected and the respective wheel speed signals are input into the adhesion estimating device, a range of the current adhesion value can be achieved. The lower limit value of the range can be estimated from the individual braking demand without causing activity of the wheel slip protection system, i.e. the slip does not exceed a predetermined value, and the upper limit value of the range can simultaneously be estimated from the individual braking demand with causing activity of the wheel slip protecting system, i.e. the slip exceeds a predetermined value.

According to a third implementation of the adhesion estimating device according to the aspect or anyone of the a preceding implementations, the braking demand distributing unit is configured to change the brake having a maximum braking demand amongst the different individual braking demands in subsequent braking processes.

By changing the brake having a maximum braking demand amongst the different individual braking demands, the maximum wear and the maximum thermal load respectively occur at different brakes in subsequent braking processes so that the wear and the thermal load are equalized. Therefore, on the one hand, maintenance can be reduced since a change of brake pads and brake disk are not necessary soon as if the maximum brake demand is always given to the same brake and, on the other hand, a current overheating can be avoided.

According to a fourth implementation of the adhesion estimating device according to the aspect or to anyone of the preceding implementations, it further comprises a location determination module determining a current position of the rail vehicle for allocating the current position to related stored data of adhesion values.

The adhesion values of a track are stored e.g. in a train advisory system installed in the rail vehicle. By the location determination module, the current position of the rail vehicle can be determined and it can be allocated to the related data of stored adhesion values. Therefore, it is possible to perform calculations with the related adhesion values and it is also possible to update the stored related data of adhesion values with the current related data of adhesion for a next run on the current track.

According to a fifth implementation of the adhesion estimating device according to the fourth implementation, it further comprises a communication module communicating with a central handling or advisory office updating data of adhesion values stored in the train advisory system or updating the data of adhesion values stored in the central handling or advisory office.

The central handling and advisory office provides e.g. adhesion data for track sections. These adhesion data are stored in the office with respect to a particular environmental situation. By the communication module, on the one hand, it is possible to update e.g. the adhesion data stored at the central handling and advisory office for use by the next rail vehicle or to update the adhesion data of subsequent track sections in the train advisory system so that an estimation can be waived if the data are up to date.

According to a further aspect of the invention, a method for estimating adhesion between wheels of wheelsets of a rail vehicle and a rail, the rail vehicle comprising a brake system having brakes that can individually brake the wheelsets, is provided. The method includes the steps: introducing an overall braking demand for a predetermined deceleration into a braking demand distributing unit, redistributing the overall braking demand into different individual braking demands to the brakes such that the individual braking demands result in the predetermined deceleration; detecting slip of the wheels, and determining a correlation between a current individual braking demand to one of the individual brakes and a current slip the wheels of the wheel sets related to the one of the individual brakes.

By the provision of such a method, it is possible to acquire information for estimating the adhesion value between the wheel and the rail during a traffic determined braking need. Therefore, during a regular deceleration, the brakes can be actuated, initiated by different individual braking demands by the braking demand distributing unit, such that different braking torques and, therefore, different braking forces occur. The individual braking demand are set such that the predetermined deceleration of the rail vehicle can be achieved.

Due to the detection of the slip of the wheels of the individual wheelset, a context between the individual braking demand and the slip can be determined. Since the adhesion values are previously allocated to individual braking demands, the allocation of the current adhesion value to the current slip and, therefore, the estimation of the current adhesion value are possible.

According to a first implementation of the method according to the further aspect, the individual braking demand is a braking demand resulting in a maximum designed braking torque of one of the individual brakes.

When setting one of the individual braking demands such that it results in a maximum designed braking torque of the brake, a quick and reliable occurrence of slip is enabled such that the deceleration according to the best stopping distance strategy can be started soon.

According to the invention the method further includes the steps: detecting an activity of a wheel slip protection system due to occurrence of slip of at least one of the wheels caused by a current individual braking demand, and estimating an adhesion value from a correlation between the adhesion values and individual braking demands stored in a memory area of an adhesion estimating device to the current individual braking demand.

The slip of the wheels can easily be detected by the wheel slip protection system usually provided in rail vehicles. Therefore, by an output of wheel speed signals from the wheel slip protection system into the adhesion estimating device, the current adhesion value known due to the stored correlation can easily be estimated from the current braking demand and the current slip.

According to the invention the method further includes the steps: detecting an activity of the wheel slip protection system due to occurrence of slip of several wheels caused by current individual brake demands, and estimating a range of the adhesion value between a lower adhesion limit value allocated to a maximum individual braking demand without activity of the slip protection system and an upper adhesion limit value allocated to a minimum individual braking demand with activity of the slip protection system from the current individual braking demands.

When the slip of several wheels is detected and the respective wheel speed signals are input into the adhesion estimating device, a range of the current adhesion value can be achieved. The lower limit value of the range can be estimated from the individual braking demand without causing activity of the wheel slip protection system, i.e. the slip does not exceed a predetermined value, and the upper limit value of the range can simultaneously be estimated from the individual braking demand with causing activity of the wheel slip protecting system, i.e. the slip exceeds another predetermined value.

According to a second implementation of the method according to the further aspect it further includes the step: turning into a best stopping distance strategy of the brake system after a predetermined interval after the slip is detected.

Due to the turn to the best stopping distance strategy after a predetermined interval after the current slip is detected, one the one hand, the estimation of the current adhesion value is possible and, on the other hand, an effective deceleration without occurrence of extensive slip at the individual wheelsets is possible.

According to a third implementation of the method according to the further aspect or anyone of the first or second implementation, it further includes the step: changing the brake having a maximum braking demand amongst the different individual braking demands in subsequent braking processes.

When setting one of the individual braking demands such that it results in a maximum designed braking torque of the brake, a quick and reliable occurrence of slip is enabled such that the deceleration according to the best stopping distance strategy can be started soon.

According to a fourth implementation of the method according to the further aspect or to anyone of the first to third implementation it further includes the steps: determining a current position of the rail vehicle, and allocating the current position to related stored data of adhesion values.

The adhesion values of a track are stored e.g. in a train advisory system installed in the rail vehicle. By the location determination module, the current position of the rail vehicle can be determined and it can be allocated to the related data of stored adhesion values. Therefore, it is possible to perform calculations with the related adhesion values and it is also possible to update the stored related data of adhesion values with the current related data of adhesion for a next run on the current track.

According to a fifth implementation of the method according to the fourth implementation, it further includes the steps: updating the data of adhesion values stored in the train advisory system with data of adhesion values stored in a central handling or advisory office, and/or updating the data of adhesion values stored in a central handling or advisory office with the data of adhesion values stored in the train advisory system.

The invention is now elucidated by an embodiment referring to the drawings.

In particular

Fig. 1     shows a block diagram of a brake system having an adhesion estimation device provided in a rail vehicle;

Fig. 2a     shows a schematic view of a situation on a track having a good adhesion; and

Fig. 2b     shows a schematic view of a situation on a track having a reduced adhesion.

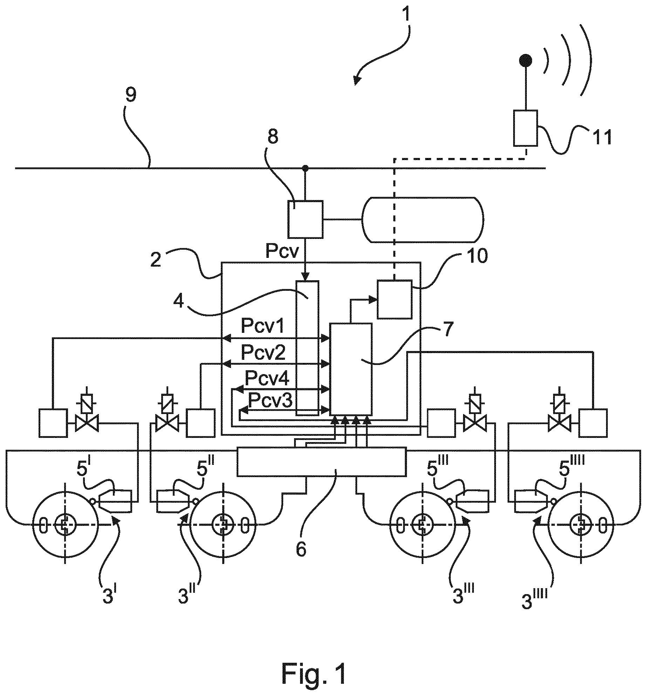

In **Fig.** 1, a block diagram of a brake system 1 of a rail vehicle is shown. The brake system 1 comprises an adhesion estimation device 2. The brake system 1 is further provided with brakes 3', 3", 3''', 3"" that can individually be braked.

The adhesion estimating device 2 comprises a distributor valve as a braking demand distributing unit 4 for redistributing an overall braking demand of a brake control unit 8 or of a superordinated distributor into individual braking demands to the brakes 3', 3", 3''', 3"". The braking demand control unit 8 is connected to a main brake pipe 9 Therefore, the braking demand distributing unit is provided with an algorithm. Alternatively, an upgraded brake control unit or a separate unit behind a normal brake control unit 8 works as the brake demand distributing unit 4.

The braking demand distributing unit 4 is configured to redistribute the overall braking demand requested for a predetermined deceleration into different individual braking demands such that the individual braking demands result in the predetermined deceleration. The braking demand is represented by the pressures Pcv1, Pcv2, Pcv3 and Pcv4 acting in brake cylinders 5', 5", 5''', 5"" of the brakes 3', 3", 3''', 3"".

In an alternative embodiment, the actors of the brakes 3', 3", 3''', 3"" can be electric actuators instead of the brake cylinders 5', 5", 5''', 5"". The individual braking demands are then represented by appropriate electric signals.

A detection system 6 detects slip of wheels of a wheelset of the rail vehicle and inputs a signal related to the slip (wheel speed signal) into an evaluation unit 7, wherein the wheelsets are individually braked by the brakes 3', 3", 3''', 3"". In this embodiment, the adhesion estimating device 2 is configured to receive data of a wheel slip protection system as the detection system 6. In an alternative embodiment, the detection system can be formed by a wheel speed sensor and a speed sensor for the rail vehicle connected to an appropriate analysis unit.

The adhesion estimating device 2 is further configured to detect an activity of the wheel slip protection system due to occurrence of the slip of at least one of the wheels caused by a current individual braking demand and the evaluation unit 7 is configured to estimate the adhesion value from the current individual braking demand.

The evaluation unit 7 provided in the adhesion estimating device determines a correlation between a current adhesion value allocated to a current individual braking demand to one of the brakes 3', 3", 3''', 3"" and a current slip of a wheel of the wheelset braked by the one of the brakes 3', 3", 3''', 3"" detected by the detection system 6 and input into the evaluation unit 7 for estimating an adhesion value between the wheel and the rail. Therefore, the evaluation unit 7 comprises an algorithm determining adhesion utilization values belonging to the single wheelsets and the wheel slip protection system signal determining whether macro slip began, or not.

The adhesion estimating device 2 is further configured such that one of the individual braking demands to one of the brakes 3', 3", 3''', 3"" is a braking demand resulting in a maximum designed braking torque of the brake. Other braking demands are different.

| overall demand (overall D%) or (Cv overall pressure%) | redistribution(individual D%) of Cv_individual pressure % on the 4 wheelsets |
|---|---|
| 100 | 100-100-100-100 |
| 90 | 100-90-90-80 or 80-90-90-100 or 90-100-80-90- in turn |
| 80 | 100-90-80-50 or 80-50-90-100 or 80-50-100-90- in turn |
| ... | |

In the brake system 1 designed with separate load proportional valves at each wheelset, all redistributed brake demands (individual D%) correlate with a respective single adhesion utilization value independent from the actual loading conditions: "brake demand level not causing WSP activity" itself can be a measure of an available adhesion; and "brake demand level causing WSP activity" itself can be a measure of reduction of adhesion.

Therefore, the estimation of adhesion between the upper limit value and the lower limit value is possible without measurement.

The adhesion estimating device 2 further comprises a memory area configured to store correlations between adhesion values and individual braking demands.

For creating a lookup table, a so-called "Quasi calibrating of the coach" is to be performed. This can be done be using type test results or by performing test runs (i.e. braking an unhooking vehicle) on dry track by the vehicle and by measuring the decelerations.

Equation (I) represents a calculation of an adhesion utilization $\mu a$ (average adhesions values):

$$\mu_a = \frac{F_B(D\%)}{m \cdot g} = \frac{a(D\%)}{g} \qquad \dots (I)$$

wherein:

| m | is a weighted mass of the vehicle; |
|---|---|
| a (overall D%) | is an average deceleration of the vehicle as a function of the brake demand; |
| $F_B$ | is an average braking force between the wheel and the rail as a function of the brake demand; and |
| g | is a gravitational constant. |

In these tests, a speed dependence is neglected. The nature of a wheel rail connection coefficient is that its maximum value decreases at higher speed. However, also the wind resistance contributes to a decelerating at higher speed which reduces the detection failure. Therefore, the chosen measurement will roughly characterize the track adhesion quality in case of a wheel slide. Therefore, $\mu$a will be a characteristic value of the track adhesion quality.

Example of a lookup table from a "Quasi calibrating" process:

| Braking demand Overall D% equal at all wheelsets(before redistribution) [%] | Cv pressure [bar] (or electric signal if relevant) | $\mu_3$ [-] (adhesion utilisation)a, Therefore, $\mu$a is a function of D%: $\mu$a (D%) |
|---|---|---|
| 100 | 3,6 | 0,12 |
| 90 | 3,2 | 0,108 |
| 80 | 2,9 | 0,096 |
| 70 | 2,5 | 0,084 |
| 60 | 2,2 | 0,072 |
| 50 | 1,8 | 0,06 |
| 40 | 1,4 | 0,048 |
| 30 | 1,1 | 0,036 |
| 20 | 0,7 | 0,024 |
| 10 | 0,4 | 0,012 |

The adhesion estimating device 2 is further configured to detect the activity of the wheel slip protection system due to the occurrence of the slip of several wheels caused by current individual braking demands, and to estimate, from the current individual braking demands, a range of the adhesion value between a lower adhesion limit value allocated to a current maximum individual braking demand without causing activity of the slip protection system and an upper adhesion limit value allocated to a current minimum individual braking demand with causing activity of the slip protection system.

Example of a lookup table of an adhesion value range

The individual brake demands on the wheelsets (WS) are in decreasing sequence: D1% - D2% - D3% - D4%.

| Macroslip detection at WS with D1% demand: | Macroslip detection at WS with D2% demand: | Macroslip detection at WS with D3% demand: | Macroslip detection at WS with D4% demand: | Adhesion estimation |
|---|---|---|---|---|
| no | no | no | no | higher than $\mu$a(D1%) |
| yes | no | no | no | between ($\mu$a (D2%) ...$\mu$a (D1%)) |
| yes | yes | no | no | between ($\mu$a (D3%) ...$\mu$a (D2%)) |
| yes | yes | yes | no | between ($\mu$a (D4%) ...$\mu$a (D3%)) |
| yes | yes | yes | yes | lower than $\mu$a (D4%) |

Example of the lookup table of the adhesion value range with numbers (80% overall brake demand: redistributed amongst the local axles; i.e. 100-90-80-50%)

| Macroslip detection on WS with D1% demand: | Macroslip detection on WS with D2% demand:: | Macroslip detection on WS with D3% demand:: | Macroslip detection on WS with D4% demand:: | Adhesion estimation |
|---|---|---|---|---|
| no | no | no | no | higher than 0.12 |
| yes | no | no | no | between (0.108 ... 0.12) |
| yes | yes | no | no | between (0.096 ... 0.2108) |
| yes | yes | yes | no | between (0.06 ... 0.096) |
| yes | yes | yes | yes | lower than 0.06 |

In this example, the moderate reduction of adhesion (above 0,096) could not be detected if the braking would merely be performed with equally distributed braking moments of 80% at each wheelset.

The adhesion estimating device 2 it is further configured to turn to a best stopping distance strategy after a predetermined interval (e.g. 2 seconds) after the current slip was detected. Optionally, the brake demand distributing unit 4 returns to an equal redistribution of the individual braking demands not disturbing the best stopping distant strategy of the wheel slip protection system. A backup principle is an equal redistribution of the individual braking demands.

Furthermore, the braking demand distributing unit 4 is configured to change the brake 3', 3", 3''', 3"" having a maximum braking demand amongst the different individual braking demands in subsequent braking processes. Here, the 100% braked wheelset is changed upon each braking process.

The adhesion estimating device 2 further comprises a location determination module 10 determining a current position of the rail vehicle for allocating the current position to related data of adhesion values stored in a train advisory system. The location determination module 10 can e.g. be connected to an antenna of a Global Positioning System (GPS) for determining the current position. Alternatively, a reference point of the track can be detected and the current position can be determined by detection of the travelled distance.

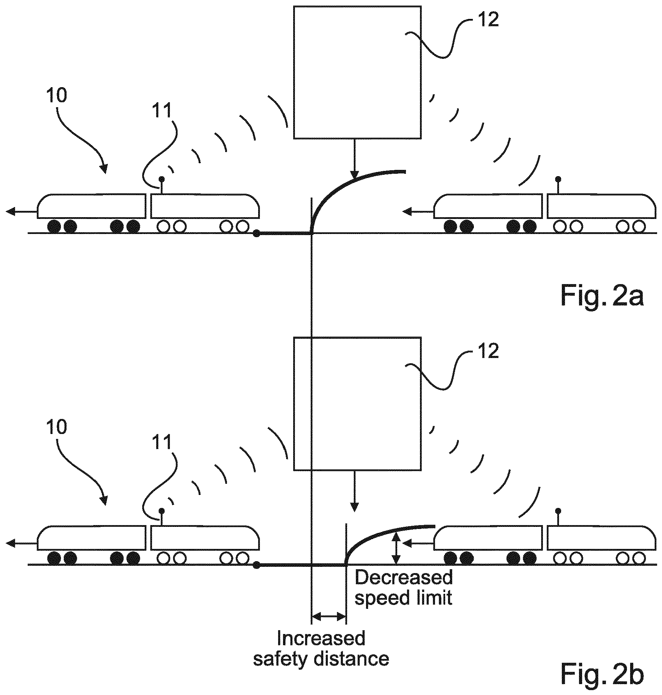

**Fig. 2a** shows a schematic view of a rail track having a good adhesion and **Fig. 2b** shows a schematic view of a rail track having a reduced adhesion.

The location determining module 10 further comprises a communication module 11 communicating with a central handling or advisory office 12. The central handling or advisory office 12 is e.g. the ETCS (European Train Control System) center, amongst others, storing adhesions values of the tracks. By the communication module 11, on the one hand, it is possible to update data of adhesion values stored in the train advisory system of the rail vehicle, therefore, to receive update information for using different deceleration curves even the rail vehicle is not provided with an adhesion estimation device. Furthermore, an updating of the data of adhesion values stored in the central handling or advisory office is also possible to provide the central handling or advisory office 12 with updated data of the adhesion values of the tracks for determining a deceleration curve for a following train.

In use, an overall braking demand for a predetermined deceleration is introduced into the braking demand distributing unit 4. The braking demand distributing unit 4 redistributes the overall braking demand into different individual braking demands to the brakes 3', 3", 3''', 3"" such that the individual braking demands result in the predetermined deceleration. Subsequently, the slip of the wheels is detected and a correlation between a current individual braking demand to one of the individual brakes and a current slip of the wheels of the wheel sets related to the one of the individual brakes is determined.

When redistributing the individual braking demands, the individual braking demand can be a braking demand resulting in a maximum designed braking torque of one of the individual brakes.

During the redistribution of the individual braking demands, the adhesion value is estimated from a correlation, between the adhesion values allocated to the individual braking demands, stored in the memory area of the adhesion estimating device 2 and the current slip due to the individual braking demand.

Another option is to detected the activity of the wheel slip protection system due to the occurrence of slip of several wheels caused by the individual braking demands and to estimate, from the current individual braking demands, a range of the adhesion value between a lower adhesion limit value allocated to the maximum individual braking demand without activity of the slip protection system and an upper adhesion limit value allocated to a minimum individual braking demand with activity of the slip protecting system.

After the predetermined interval after the slip had been detected was elapsed, it is turned to a best stopping distance strategy of the brake system. Therefore, the brake demand distributing unit can turn into an equal redistribution. However, the best stopping strategy of the wheel protection system must not be disturbed.

The brake having the maximum braking demand amongst the different individual braking demands is changed to another brake in subsequent braking processes in order to equalize wear and the thermal load of the brakes.

In order to allocate adhesions values stored in the train advisory system to the current position of the rail vehicle, the current position of the rail vehicle is determined by e.g. the GPS system.

For providing updated adhesion values or deceleration curves, adhesion values or deceleration curves stored in a central handling or advisory office are updated by data of adhesion values or deceleration curves stored in the train advisory system or vice versa. Due to the update, the train advisory system is provided with updated computation parameters. Alternatively, the safety relevant knowledge can also be communicated directly to the following rail vehicle.

REFERENCE SIGNS LIST

| | |
|---|---|
| 1 | brake system |
| 2 | adhesion estimating device |
| 3', 3", 3''', 3"" | brakes |
| 4 | brake demand distributing unit |
| 5', 5", 5''', 5"" | brake cylinder |
| 6 | detection system |
| 7 | evaluation unit |
| 8 | brake control unit |
| 9 | main brake pipe |
| 10 | location determination module |
| 11 | communication module |
| 12 | central handling or advisory office |

**Claims**

1. An adhesion estimating device (2) for a brake system (1) of a rail vehicle having brakes (3', 3", 3''', 3"") that can individually brake wheelsets of the rail vehicle, the adhesion estimating device (2) comprising:

   a braking demand distributing unit (4) for redistributing an overall braking demand into individual braking demands to the individual brakes (3', 3", 3''', 3""),
   wherein the braking demand distributing unit (4) is configured to redistribute the overall braking demand requested for a predetermined deceleration into different individual braking demands such that the individual braking demands result in the predetermined deceleration, and
   an evaluation unit (7) determining a correlation between a current adhesion value allocated to a current individual braking demand to one of the brakes (3', 3", 3''', 3"") and a current slip of a wheel of the wheelset braked by the one of the brakes (3', 3", 3''', 3""), detected by a detection system (6) and input into the evaluation unit (7), for estimating an adhesion value between the wheel and the rail, wherein
   it further comprises a memory area configured to store correlations between adhesion values and individual braking demands, and
   the adhesion estimating device (2) is configured to receive data from a wheel slip protection system, wherein the adhesion estimating device (2) is configured to detect an activity of the wheel slip protection system due to occurrence of the slip of at least one of the wheels caused by a current individual braking demand, and the evaluation unit (7) is configured to estimate the adhesion value from the current individual braking demand,
   **characterized in that**
   the adhesion estimating device (2) is further configured to detect the activity of the wheel slip protection system due to the occurrence of the slip of several wheels caused by current individual braking demands, and to estimate, from the current individual braking demands, a range of the adhesion value between a lower adhesion limit value allocated to a current maximum individual braking demand without causing activity of the slip protection system and an upper adhesion limit value allocated to a current minimum individual braking demand with causing activity of the slip protection system.

2. The adhesion estimating device (2) according to claim 1, wherein
it is further configured to turn to a best stopping distance strategy after a predetermined interval after the current slip is detected.

3. The adhesion estimating device (2) according to claim 1 or 2, wherein
it is further configured such that one of the individual braking demands to one of the brakes (3', 3", 3"', 3"") is a braking demand resulting in a maximum designed braking torque of the one of the brakes.

4. The adhesion estimating device (2) according to anyone of the preceding claims, wherein
the braking demand distributing unit (4) is configured to change the brake (3', 3", 3"', 3"") having a maximum braking demand amongst the different individual braking demands in subsequent braking processes.

5. The adhesion estimating device (2) according to anyone of the preceding claims, wherein
it further comprises a location determination module (10) determining a current position of the rail vehicle for allocating the current position to related data of stored adhesion values.

6. The adhesion estimating device (2) according to claim 5, wherein
it further comprises a communication module (11) communicating with a central handling or advisory office (12) updating data of adhesion values stored in the train advisory system or updating the data of adhesion values stored in the central handling or advisory office (12).

7. A method for estimating adhesion between wheels of wheelsets of a rail vehicle and a rail, the rail vehicle comprising a brake system (1) having brakes (3', 3", 3"', 3"") that can individually brake the wheelsets, including the steps:

   introducing an overall braking demand for a predetermined deceleration into a braking demand distributing unit (4);
   redistributing the overall braking demand into different individual braking demands to the brakes (3', 3", 3"', 3"") such that the individual braking demands result in the predetermined deceleration;
   detecting slip of the wheels; and
   determining a correlation between a current individual braking demand to one of the individual brakes and a current slip of the wheels of the wheel set related to the one of the individual brakes,
   detecting an activity of a wheel slip protection system due to occurrence of slip of at least one of the wheels caused by a current individual braking demand; and
   estimating an adhesion value from the correlations, between the adhesion values allocated to individual braking demands stored in a memory area of an adhesion estimating device, and the current individual braking demand, **characterized in that** it further includes the steps
   detecting an activity of the wheel slip protection system due to occurrence of slip of several wheels caused by current individual brake demands; and
   estimating a range of the adhesion value between a lower adhesion limit value allocated to a maximum individual braking demand without activity of the slip protection system and an upper adhesion limit value allocated to a minimum individual braking demand with activity of the slip protection system from the current individual braking demands.

8. The method according to claim 7, wherein
the individual braking demand is a braking demand resulting in a maximum designed braking torque of one of the individual brakes.

9. The method according to anyone of claims 7 or 8 further including the step:
turning into a best stopping distance strategy of the brake system (1) after a predetermined interval after the slip is detected.

10. The method according to anyone of claims 7 to 9, further including the step:
changing the brake (3', 3", 3"', 3"") having a maximum braking demand amongst the different individual braking demands in subsequent braking processes.

**11.** The method according to anyone of claims 7 to 10, further including the steps:

    determining a current position of the rail vehicle; and
    allocating the current position to related data of adhesions values stored in a train advisory system.

**12.** The method according to claim 11, further including the steps:

    updating the data of adhesion values stored in the train advisory system with data of adhesion values stored in a central handling or advisory office (12); and/or
    updating the data of adhesion values stored in the central handling or advisory office (12) with the data of adhesion values stored in the train advisory system.

**Patentansprüche**

**1.** Adhäsionsschätzvorrichtung (2) für ein Bremssystem (1) eines Schienenfahrzeugs mit Bremsen (3', 3", 3''', 3''''), die Radsätze des Schienenfahrzeugs einzeln bremsen können, wobei die Adhäsionsschätzvorrichtung (2) folgende Elemente umfasst:

    eine Bremsanforderungssverteilungseinheit (4) zum Umverteilen einer Gesamtbremsanforderung in einzelne Bremsanforderungen an die einzelnen Bremsen (3', 3", 3''', 3''''),
    wobei die Bremsanforderungsverteilungseinheit (4) dafür ausgelegt ist, die für eine vorbestimmte Verzögerung angeforderte Gesamtbremsanforderung in verschiedene einzelne Bremsanforderungen umzuverteilen, derart, dass die einzelnen Bremsanforderungen zu der vorbestimmten Verzögerung führen, und
    eine Auswerteeinheit (7), die eine Korrelation zwischen einem aktuellen Adhäsionswert, der einer aktuellen einzelnen Bremsanforderung an einer der Bremsen (3', 3", 3''', 3'''') zugeordnet ist, und einem aktuellen Schlupf eines Rades des Radsatzes bestimmt, das von der einen der Bremsen (3', 3", 3''', 3'''') gebremst wird, der von einem Erfassungssystem (6) erfasst und in die Auswerteeinheit (7) zum Schätzen eines Adhäsionswertes zwischen Rad und Schiene eingegeben wird, wobei sie ferner einen Speicherbereich umfasst, der dafür ausgelegt ist, Korrelationen zwischen Adhäsionswerten und einzelnen Bremsanforderungen zu speichern, und die Adhäsionsschätzvorrichtung (2) dafür ausgelegt ist, Daten von einem Radschlupfschutzsystem zu empfangen, wobei
    die Adhäsionsschätzvorrichtung (2) dafür ausgelegt ist, eine Aktivität des Radschlupfschutzsystems aufgrund des Auftretens des Schlupfes mindestens eines der Räder, der durch eine aktuelle einzelne Bremsanforderung verursacht wird, zu erfassen, und die Auswerteeinheit (7) dafür ausgelegt ist, den Adhäsionswert aus der aktuellen einzelnen Bremsanforderung zu schätzen,
    **dadurch gekennzeichnet, dass**
    die Adhäsionsschätzvorrichtung (2) ferner dafür ausgelegt ist, die Aktivität des Radschlupfschutzsystems aufgrund des Auftretens des Schlupfes mehrerer Räder, der durch aktuelle einzelne Bremsanforderungen verursacht wird, zu erfassen und aus den aktuellen einzelnen Bremsanforderungen einen Bereich des Adhäsionswerts zwischen einem unteren Adhäsionsgrenzwert, der einer aktuellen maximalen einzelnen Bremsanforderung zugeordnet ist, ohne Aktivität des Schlupfschutzsystems zu verursachen, und einem oberen Adhäsionsgrenzwert, der einer aktuellen minimalen einzelnen Bremsanforderung zugeordnet ist und Aktivität des Schlupfschutzsystems verursacht, zu schätzen.

**2.** Adhäsionsschätzvorrichtung (2) nach Anspruch 1, wobei
sie ferner dafür ausgelegt ist, zu einer Strategie des besten Anhaltewegs überzugehen, und zwar nach einem vorbestimmten Intervall, nachdem der aktuelle Schlupf erfasst wurde.

**3.** Adhäsionsschätzvorrichtung (2) nach Anspruch 1 oder 2, wobei
sie ferner so ausgelegt ist, dass eine der einzelnen Bremsanforderungen an eine der Bremsen (3', 3", 3''', 3'''') eine Bremsanforderung ist, die zu einem maximalen Bemessungsbremsmoment der einen der Bremsen führt.

**4.** Adhäsionsschätzvorrichtung (2) nach einem der vorhergehenden Ansprüche, wobei
die Bremsanforderungsverteilungseinheit (4) dafür ausgelegt ist, die Bremse (3', 3", 3''', 3'''') mit einer maximalen Bremsanforderung unter den verschiedenen einzelnen Bremsanforderungen bei nachfolgenden Bremsvorgängen zu wechseln.

5. Adhäsionsschätzvorrichtung (2) nach einem der vorhergehenden Ansprüche, wobei
sie ferner ein Standortbestimmungsmodul (10) umfasst, das eine aktuelle Position des Schienenfahrzeugs bestimmt, zu dem Zweck, die aktuelle Position zugehörigen Daten gespeicherter Adhäsionswerte zuzuordnen.

6. Adhäsionsschätzvorrichtung (2) nach Anspruch 5, wobei
sie ferner ein Kommunikationsmodul (11) umfasst, das mit einer zentralen Abwicklungs- oder Informationsstelle (12) kommuniziert, das die im Zuginformationssystem gespeicherten Daten von Adhäsionswerten aktualisiert oder die in der zentralen Abwicklungs- oder Informationsstelle (12) gespeicherten Daten von Adhäsionswerten aktualisiert.

7. Verfahren zum Schätzen von Adhäsion zwischen Rädern von Radsätzen eines Schienenfahrzeugs und einer Schiene, wobei das Schienenfahrzeug ein Bremssystem (1) mit Bremsen (3', 3'', 3''', 3'''') umfasst, die die Radsätze einzeln abbremsen können, einschließlich der folgenden Schritte:

Eingeben einer Gesamtbremsanforderung für eine vorbestimmte Verzögerung in eine Bremsanforderungsverteilungseinheit (4);
Umverteilen der Gesamtbremsanforderung in verschiedene einzelne Bremsanforderungen an die Bremsen (3', 3'', 3''', 3''''), derart, dass die einzelnen Bremsanforderungen zu der vorbestimmten Verzögerung führen;
Erfassen von Schlupf der Räder; und
Bestimmen einer Korrelation zwischen einer aktuellen einzelnen Bremsanforderung an eine der einzelnen Bremsen und einem aktuellen Schlupf der Räder des Radsatzes in Bezug auf die eine der einzelnen Bremsen, Erfassen einer Aktivität eines Radschlupfschutzsystems aufgrund des Auftretens von Schlupf an mindestens einem der Räder, der durch eine aktuelle einzelne Bremsanforderung verursacht wird; und
Schätzen eines Adhäsionswertes aus den Korrelationen zwischen den Adhäsionswerten, die einzelnen Bremsanforderungen, die in einem Speicherbereich einer Adhäsionsschätzvorrichtung gespeichert sind, zugeordnet sind, und der aktuellen einzelnen Bremsanforderung,
**dadurch gekennzeichnet, dass** das Verfahren ferner die folgenden Schritte beinhaltet:

Erfassen einer Aktivität des Radschlupfschutzsystems aufgrund des Auftretens von Schlupf an mehreren Rädern, der durch aktuelle einzelne Bremsanforderungen verursacht wird; und
Schätzen eines Bereichs des Adhäsionswertes zwischen einem unteren Adhäsionsgrenzwert, der einer maximalen einzelnen Bremsanforderung ohne Aktivität des Schlupfschutzsystems zugeordnet ist, und einem oberen Adhäsionsgrenzwert, der einer minimalen einzelnen Bremsanforderung mit Aktivität des Schlupfschutzsystems zugeordnet ist, aus den einzelnen Bremsanforderungen.

8. Verfahren nach Anspruch 7, wobei
die einzelne Bremsanforderung eine Bremsanforderung ist, die zu einem maximalen Bemessungsbremsmoment einer der einzelnen Bremsen führt.

9. Verfahren nach einem der Ansprüche 7 oder 8, ferner beinhaltend den folgenden Schritt:
Übergehen zu einer Strategie des besten Anhaltewegs des Bremssystems (1) nach einem vorbestimmten Intervall, nachdem der Schlupf erfasst wurde.

10. Verfahren nach einem der Ansprüche 7 bis 9, ferner beinhaltend den folgenden Schritt:
Wechseln der Bremse (3', 3'', 3''', 3'''') mit einer maximalen Bremsanforderung unter den verschiedenen einzelnen Bremsanforderungen bei nachfolgenden Bremsvorgängen.

11. Verfahren nach einem der Ansprüche 7 bis 10, ferner beinhaltend die folgenden Schritte:

Bestimmen einer aktuellen Position des Schienenfahrzeugs; und
Zuordnen der aktuellen Position zu zugehörigen Daten von Adhäsionswerten, die in einem Zuginformationssystem gespeichert sind.

12. Verfahren nach Anspruch 11, ferner beinhaltend die folgenden Schritte:

Aktualisieren der im Zuginformationssystem gespeicherten Daten von Adhäsionswerten mit Daten von Adhäsionswerten, die in einer zentralen Abwicklungs- oder

Informationsstelle (12) gespeichert sind; und/oder Aktualisieren der Daten von Adhäsionswerten, die in der zentralen Abwicklungs- oder Informationsstelle (12) gespeichert sind, mit den im Zuginformationssystem gespeicherten Daten von Adhäsionswerten.

## Revendications

1. Dispositif (2) d'estimation de l'adhérence pour un système (1) de frein d'un véhicule ferroviaire ayant des freins (3', 3", 3''', 3""), qui peuvent freiner individuellement des essieux du véhicule ferroviaire, le dispositif (2) d'estimation de l'adhérence comprenant :

   une unité (4) de distribution des exigences de freinage pour redistribuer une exigence globale de freinage en des exigences individuelles de freinage aux freins (3', 3", 3''', 3"") individuels,
   dans lequel l'unité (4) de distribution d'exigence de freinage est configurée pour redistribuer l'exigence globale de freinage requise pour une décélération déterminée à l'avance en différentes exigences individuelles de freinage, de manière à ce que les exigences individuelles de freinage donnent la décélération déterminée à l'avance, et
   une unité (7) d'évaluation déterminant une corrélation entre une valeur d'adhérence en cours attribuée à une exigence individuelle de freinage en cours à l'un des freins (3', 3", 3''', 3"") et un patinage en cours d'une roue de l'essieu freinée par l'un des freins (3', 3", 3''', 3"") détecté par un système (6) de détection et entré dans l'unité (7) d'évaluation, pour estimer une valeur de l'adhérence entre la roue et le rail, dans lequel il comprend en outre une zone de mémoire configurée pour mettre en mémoire des corrélations entre des valeurs d'adhérence et des exigences individuelles de freinage et
   le dispositif (2) d'estimation de l'adhérence est configuré pour recevoir des données d'un système de protection vis-à-vis du patinage des roues, dans lequel
   le dispositif (2) d'estimation de l'adhérence est configuré pour détecter une activité du système de protection vis-à-vis du patinage des roues due à l'apparition du patinage d'au moins l'une des roues provoqué par une exigence individuelle de freinage en cours, et l'unité (7) d'évaluation est configurée pour estimer la valeur de l'adhérence à partir de l'exigence individuelle de freinage en cours,
   **caractérisé en ce que**
   le dispositif (2) d'estimation de l'adhérence est configuré en outre pour détecter l'activité du système de protection vis-à-vis du patinage des roues due à l'apparition du patinage de plusieurs roues provoqué par des exigences individuelles de freinage en cours, et pour estimer, à partir des exigences individuelles de freinage en cours, une plage de la valeur de l'adhérence entre une valeur limite inférieure de l'adhérence attribuée à une exigence individuelle maximum de freinage en cours sans provoquer une activité du système de protection vis-à-vis du patinage et une valeur limite supérieure d'adhérence attribuée à une exigence individuelle de freinage en cours en provoquant une activité du système de protection vis-à-vis du patinage.

2. Dispositif (2) d'estimation de l'adhérence suivant la revendication 1, dans lequel
   il est configuré en outre pour se tourner vers une stratégie de distance d'arrêt la meilleure après un intervalle déterminé à l'avance après que le patinage en cours est détecté.

3. Dispositif (2) d'estimation de l'adhérence suivant la revendication 1 ou 2, dans lequel
   il est configuré en outre de manière à ce que l'une des exigences individuelles de freinage à l'un des freins (3', 3", 3''', 3"") soit une exigence de freinage donnant un couple de freinage nominal maximum de l'un des freins.

4. Dispositif (2) d'estimation de l'adhérence suivant l'une quelconque des revendications précédentes, dans lequel
   l'unité (4) de distribution des exigences de freinage est configurée pour changer le frein (3', 3", 3''', 3"") ayant une exigence maximale de freinage parmi les différentes exigences individuelles de freinage dans des processus subséquents de freinage.

5. Dispositif (2) d'estimation de l'adhérence suivant l'une quelconque des revendications précédentes, dans lequel
   il comprend en outre un module de détermination d'emplacement déterminant une position en cours du véhicule ferroviaire pour attribuer la position en cours à des données en relation des valeurs d'adhérence mises en mémoire.

6. Dispositif (2) d'estimation de l'adhérence suivant la revendication 5, dans lequel
   il comprend en outre un module (11) de communication communiquant avec un office (12) central de manipulation ou de conseil mettant à jour des données de valeur de l'adhérence mises en mémoire dans le système de conseil de train ou mettant à jour les données de valeur d'adhérence mises en mémoire dans l'office (12) central de manipulation ou de conseil.

7. Procédé d'estimation de l'adhérence entre des roues d'essieux d'un véhicule ferroviaire et d'un rail, le véhicule ferroviaire comprenant un système (1) de freins ayant des freins (3', 3", 3'", 3""), qui peuvent freiner individuellement les essieux, comprenant les stades :

on introduit une exigence globale de freinage pour une décélération déterminée à l'avance dans une unité (4) de distribution d'exigence de freinage ;
on redistribue l'exigence globale de freinage en différentes exigences individuelles de freinage au frein (3', 3", 3'", 3"") de manière à ce que les exigences individuelles de freinage donnent la décélération déterminée à l'avance ;
on détecte un patinage des roues ; et
on détermine une corrélation entre une exigence en cours de freinage individuelle à l'un des freins individuels et un patinage en cours des roues de l'essieu se rapportant à l'un des freins individuels,
on détecte une activité d'un système de protection vis-à-vis d'un patinage des roues due à l'apparition d'un patinage d'au moins l'une des roues provoqué par une exigence individuelle de freinage en cours ;
on estime une valeur de l'adhérence à partir des corrélations entre les valeurs de l'adhérence attribuées aux exigences individuelles de freinage mises en mémoire dans une zone de mémoire d'un dispositif d'estimation de l'adhérence et l'exigence individuelle de freinage en cours,
**caractérisé en ce qu'**il comprend en outre les stades dans lesquels
on détecte une activité du système de protection vis-à-vis d'un patinage des roues, due à l'apparition d'un patinage de plusieurs roues provoqué par des exigences individuelles de freinage en cours ;
on estime une plage de la valeur de l'adhérence entre une valeur limite inférieure de l'adhérence attribuée à une exigence individuelle de freinage maximum sans activité du système de protection vis-à-vis du patinage et une valeur limite supérieure de l'adhérence attribuée à une exigence individuelle de freinage minimum avec activité du système de protection vis-à-vis du patinage à partir des exigences individuelles de freinage en cours.

8. Procédé suivant la revendication 7, dans lequel
l'exigence individuelle de freinage est une exigence de freinage donnant un couple freinage nominal maximum de l'un des freins individuels.

9. Procédé suivant l'une quelconque des revendications 7 ou 8, comprenant en outre le stade :
on se tourne vers une stratégie de distance d'arrêt la meilleure du système (1) de frein après un intervalle déterminé à l'avance après que le patinage est détecté.

10. Procédé suivant l'une quelconque des revendications 7 à 9, comprenant en outre le stade dans lequel :
on change le frein (3', 3", 3'", 3"") ayant une exigence maximum de freinage parmi les différentes exigences individuelles de freinage dans des processus subséquents de freinage.

11. Procédé suivant l'une quelconque des revendications 7 à 10, comprenant en outre les stades dans lesquels :

on détermine une position en cours du véhicule ferroviaire ;
on attribue la position en cours à des données en relation de valeurs d'adhérence mises en mémoire dans un système de conseil de train.

12. Procédé suivant la revendication 11, comprenant en outre les stades dans lesquels :

on met à jour les données de valeur d'adhérence mises en mémoire dans le système de conseil de train avec des données de valeur d'adhérence mises en mémoire dans un office (12) central de manipulation de conseil ; et/ou
on met à jour les données de valeur d'adhérence mises en mémoire dans l'office (12) central de manipulation ou de conseil avec les données de valeur d'adhérence mises en mémoire dans le système de conseil de train.

EP 3 354 524 B1

Fig. 1

Fig. 2a

Decreased
speed limit

Increased
safety distance

Fig. 2b

## REFERENCES CITED IN THE DESCRIPTION

**Patent documents cited in the description**

• EP 2813409 A